# EUROPEAN PATENT APPLICATION

(11) **EP 3 425 532 A1**
(43) Date of publication of application: **09.01.2019**
(21) Application number: 17899234.3
(22) Date of filing: 30.06.2017
(51) Int. Cl.: G06F 17/30, G06F 17/27

(54) **INFORMATION MINING METHOD AND SYSTEM, ELECTRONIC DEVICE AND READABLE STORAGE MEDIUM**

(30) Priority: 05.05.2017 CN 201710313993
(71) Applicant: Ping An Technology (Shenzhen) Co., Ltd., Shenzhen, Guangdong 518000 (CN)
(72) Inventor: JIN, Ge, Shenzhen Guangdong 518000 (CN); XU, Liang, Shenzhen Guangdong 518000 (CN); XIAO, Jing, Shenzhen Guangdong 518000 (CN)
(74) Representative: Inal, Aysegul Seda
(86) International application number: PCT/CN2017/091360
(87) International publication number: WO 2018/201600

(57) **Abstract**

The disclosure discloses a method and system of mining information, an electronic device and a readable storage medium. The method includes: obtaining a specific type of information from a pre-determined data source in real time or regularly; performing word segmentation processing on all pieces of obtained information, and performing part-of-speech tagging on all participles corresponding to all the pieces of information; building preset structure participle trees by all the participles corresponding to all the pieces of information according to the participle sequence and the parts of speech of all the participles corresponding to all the pieces of information; and after the building of the preset structure participle tree corresponding to one piece of information is completed, resolving key idea information corresponding to the information according to the preset structure participle tree corresponding to the information. The disclosure realizes deep mining of the information, and accurately obtains the key idea information in the information.

## Description

### CLAIM OF PRIORITY

This application is based on the Paris Convention and claims priority to China Patent Application No. CN2017103139931, filed on May 05, 2017 and entitled "Method of Mining Information, Electronic Device and Readable Storage Medium", which is hereby incorporated by reference in its entirety.

### TECHNICAL FIELD

This disclosure relates to the technical field of computers, and more particularly relates to a method and system of mining information, an electronic device and a readable storage medium.

### BACKGROUND

At the present, in the field of information mining and pushing, the industry generally analyzes and screens specific types of information (for example, news title information) in real time or regularly from pre-determined data sources (for example, various news sites) so as to automatically dig out target information. An existing analyzing and screening solution is that: pre-training a classifier for recognizing type labels of information, and then recognizing the type labels of the specific types of information by using the trained classifier so as to recognize the target information belonging to a preset type label. This existing analyzing and screening solution can only recognize the target information belonging to the preset type label, but cannot deeply mine key idea information pointed by the target information, so that the accuracy of mining and pushing of the target information cannot be guaranteed, and mistakes are easily made.

### SUMMARY

The disclosure mainly aims at providing a method and system of mining information, an electronic device and a readable storage medium, and is designed to effectively dig out key idea information.

To achieve the above-mentioned objective, a method of mining information is provided according to a first aspect of the disclosure, the method including:
obtaining a specific type of information in real time or regularly from a pre-determined data source;
performing word segmentation processing on all pieces of obtained information, and performing part-of-speech tagging on all participles corresponding to all the pieces of information;
building preset structure participle trees by all the participles corresponding to all the pieces of information according to the participle sequence and the parts of speech of all the participles corresponding to all the pieces of information;
after the building of the preset structure participle tree corresponding to one piece of information is completed, resolving key idea information corresponding to the information according to the preset structure participle tree corresponding to the information.

A system of mining information is provided according to a second aspect of the disclosure, the system including:
an obtaining module, which is used for obtaining a specific type of information in real time or regularly from a pre-determined data source;
a word segmentation module, which is used for performing word segmentation processing on all pieces of obtained information, and performing part-of-speech tagging on all participles corresponding to all the pieces of information;
a building module, which is used for building preset structure participle trees by all the participles corresponding to all the pieces of information according to the participle sequence and the parts of speech of all the participles corresponding to all the pieces of information;
a resolving module, which is used for resolving key idea information corresponding to one piece of information according to the preset structure participle tree corresponding to the information after the building of the preset structure participle tree corresponding to the information is completed.

An electronic device is provided according to a third aspect of the disclosure, the electronic device including storage equipment, processing equipment and a system of mining information, which is stored on the storage equipment and is operated on the processing equipment. The system of mining the information is executed by the processing equipment to implement the following steps:
obtaining a specific type of information in real time or regularly from a pre-determined data source;
performing word segmentation processing on all pieces of obtained information, and performing part-of-speech tagging on all participles corresponding to all the pieces of information;
building preset structure participle trees by all the participles corresponding to all the pieces of information according to the participle sequence and the parts of speech of all the participles corresponding to all the pieces of information;
after the building of the preset structure participle tree corresponding to one piece of information is completed, resolving key idea information corresponding to the information according to the preset structure participle tree corresponding to the information.

A computer readable storage medium is provided according to a fourth aspect of the disclosure, which stores at least one computer readable instruction executed by processing equipment to implement the following operation:
obtaining a specific type of information in real time or regularly from a pre-determined data source;
performing word segmentation processing on all pieces of obtained information, and performing part-of-speech tagging on all participles corresponding to all the pieces of information;
building preset structure participle trees by all the participles corresponding to all the pieces of information according to the participle sequence and the parts of speech of all the participles corresponding to all the pieces of information;
after the building of the preset structure participle tree corresponding to one piece of information is completed, resolving key idea information corresponding to the information according to the preset structure participle tree corresponding to the information.

The method and system of mining the information, the electronic device and the readable storage medium, which are provided by the disclosure, perform word segmentation on the specific type of information obtained from the data source, perform part-of-speech tagging on all the participles, build the preset structure participle trees according to the sequence and the parts of speech of all the participles, and resolve the key idea information corresponding to the information based on the built preset structure participle trees. The word segmentation is performed on the obtained information, the preset structure participle trees are built according to the parts of speech of all the participles, and deep connections of all the participles in the information are mined by using the preset structure participle trees to obtain the key idea information, so that deep mining for the information is realized, and the key idea information in the information is accurately obtained.

### BRIEF DESCRIPTION OF THE ACCOMPANYING DRAWINGS

FIG. 1 is a schematic diagram of an application environment of a preferred embodiment of a method of mining information of the disclosure;
FIG. 2 is a schematic diagram of a functional module of one embodiment of a system 10 of mining information of the disclosure;
FIG. 3 is a schematic diagram of a preset structure participle tree in one embodiment of a method of mining information of the disclosure;
FIG. 4 is a flowchart of one embodiment of a method of mining information of the disclosure.

Achieving of objectives, functional features, and advantages of this disclosure will be further described below in connection with the accompanying drawings.

### DETAILED DESCRIPTION OF ILLUSTRATED EMBODIMENTS

For the purpose of making technical problems to be solved, technical solutions and beneficial effects of the disclosure clearer and more understandable, a further detailed description will be made below to the disclosure in combination with accompanying drawings and embodiments. It should be understood that the specific embodiments described herein are merely explanatory of the disclosure, but not intended to limit the disclosure.

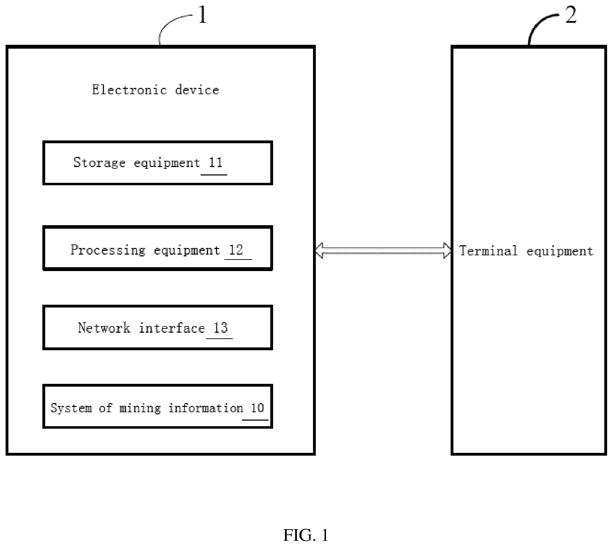

With reference to FIG. 1, it is a schematic diagram of an application environment of a preferred embodiment of a method of mining information of the disclosure. The schematic diagram of the application environment includes an electronic device 1 and terminal equipment 2. The electronic device 1 may perform data interaction with the terminal equipment 2 by means of a proper technology such as a network and a near field communication technology.

The terminal equipment 2 includes, but not limited to, any electronic product capable of performing human-machine interaction with a user by means of a keyboard, a mouse, a remote controller, a touch panel or voice control equipment, for example, a personal computer, a flat computer, a smart phone, a PDA (Personal Digital Assistant), a game machine, an IPTV (Internet Protocol Television) and intelligent wearable equipment.

The electronic device 1 is equipment capable of automatically calculating a value and/or processing information according to a preset or pre-stored instruction. The electronic device 1 may be a computer, a single network server, a server group consisting of multiple network servers, or a cloud computing-based cloud consisting of a large number of hosts or network servers, wherein as one of distributed computations, cloud computing is a super virtual computer consisting of a group of loosely-coupled computer sets.

In this embodiment, the electronic device 1 may include, but not limited to, storage equipment 11, processing equipment 12 and a network interface 13 which are connected with one another through a system bus in a communicating manner. It should be noted that FIG. 1 only shows the electronic device 1 having assemblies from 11 to 13, but it should be understood that it does not require that all the shown assemblies are implemented, and to be substitutable, more or fewer assemblies are implemented.

Wherein, the storage equipment 11 includes an internal memory and at least one type of readable storage medium. The internal memory provides a buffer for operation of the electronic device 1; the readable storage medium may be a non-volatile storage medium, such as a flash memory, a hard disk, a multimedia card and card type storage equipment. In some embodiments, the readable storage medium may be an internal storage unit of the electronic device 1, for example, a hard disk of the electronic device 1; in some other embodiments, the non-volatile storage medium also may be external storage equipment of the electronic device 1, for example, a plug-in type hard disk, an SMC (Smart Media Card), an SD (Secure Digital) card, an FC (Flash Card) and the like which are equipped on the electronic device 1. In this embodiment, the readable storage medium of the storage equipment 11 is generally used for storing an operating system and all types of application software which are installed in the electronic device 1, for example, a program code of a system 10 of mining information in one embodiment of the disclosure and the like. In addition, the storage equipment 11 may be also used for temporarily storing all types of data which have been output or are about to be output.

The processing equipment 12 in some embodiments may include one or more micro processors, a micro controller, a digital processor, etc. The processing equipment 12 is generally used for controlling operation of the electronic device 1, for example, executing control and processing related to data interaction or communication with the terminal equipment 2 and the like. In this embodiment, the processing equipment 12 is used for operating the program code stored in the memory equipment 11 or processing data, for example, operating the system 10 of mining information.

The network interface 13 may include a wireless network interface or a wired network interface. The network interface 13 is generally used for establishing communication connection between the electronic device 1 and other sets of electronic equipment. In this embodiment, the network interface 13 is mainly used for connecting the electronic device 1 with one or multiple sets of terminal equipment 2 to establish a data transmission channel and communication connection between the electronic device 1 and one or multiple sets of terminal equipment 2.

The system 10 of mining information includes at least one computer readable instruction stored in the storage equipment 11. The at least one computer readable instruction may be executed by the processing equipment 12 to implement methods of recognizing pictures of all embodiments of the disclosure. As follows, the at least one computer readable instruction is divided into different logic modules according to different functions realized by all its parts.

In one embodiment, the system 10 of mining information is executed by the processing equipment 12 to implement the following operation: firstly, a specific type of information is obtained from a pre-determined data source in the terminal equipment 2 in real time or regularly; then word segmentation processing is performed on all pieces of obtained information, and part-of-speech tagging is performed on all participles corresponding to all the pieces of information; preset structure participle trees are built by all the participles corresponding to all the pieces of information according to the participle sequence and the parts of speech of all the participles corresponding to all the pieces of information; and after the building of the preset structure participle tree corresponding to one piece of information is completed, key idea information corresponding to the information is resolved according to the preset structure participle tree corresponding to the information, and the key idea information corresponding to the information is sent to the terminal equipment 2 so as to be displayed to a terminal user.

In one embodiment, the system 10 of mining information is stored in the storage equipment 11, and includes at least one computer readable instruction stored in the storage equipment 11. The at least one computer readable instruction may be executed by the processing equipment 12 to implement methods of recognizing pictures of all embodiments of the disclosure. As follows, the at least one computer readable instruction is divided into different logic modules according to different functions realized by all its parts.

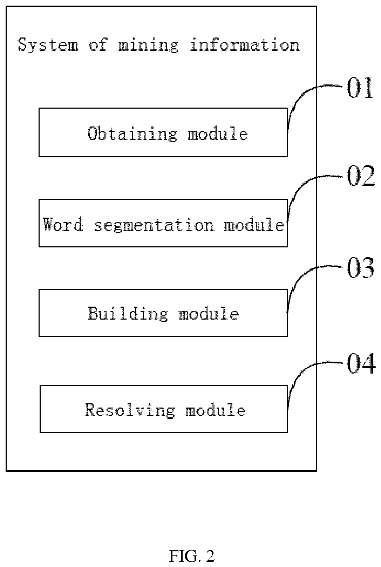

With reference to FIG. 2, it is a diagram of a functional module of a preferred embodiment of a system 10 of mining information of the disclosure. In this embodiment, the system 10 of mining information may be partitioned into one or multiple modules. The one or multiple modules are stored in the storage equipment 11, and are executed by one or multiple sets of processing equipment (the processing equipment 12 in this embodiment) to complete the disclosure. For example, in FIG. 2, the system 10 of mining information may be partitioned into an obtaining module 01, a word segmentation module 02, a building module 03 and a resolving module 04. All the above-mentioned modules include a series of computer program instruction segments. These computer program instruction segments may be executed by the processing equipment 12 to realize corresponding functions provided by all the embodiments of the disclosure. A description below will specifically introduce functions of the modules 01 to 04.

The obtaining module 01 is used for obtaining a specific type of information from a pre-determined data source in real time or regularly. For example, the specific type of information (for example, news title information, index information, brief introduction, etc.) may be obtained in real time or regularly from the pre-determined data source (for example, various news sites, forums, etc.) through a tool such as a web crawler.

The word segmentation module 02 is used for performing word segmentation processing on all pieces of obtained information, and performing part-of-speech tagging on all participles corresponding to all the pieces of information. After the specific type of pieces of information is obtained from the data source, the word segmentation processing is performed on all the pieces of obtained information. For example, the word segmentation processing may be performed on all the pieces of information by using a character string matching word segmentation method such as a forward maximum matching method which is to perform the word segmentation on a character string in one piece of information from left to right, namely to match several continuous characters in an information text to be subjected to word segmentation with a vocabulary from left to right, and if it finds a match, obtain a word by the segmentation, or a backward maximum matching method which is to perform the word segmentation on a character string in one piece of information from right to left, namely to start matching scanning from the tail end of the information text to be subjected to word segmentation, then match several continuous characters in an information text to be subjected to word segmentation with a vocabulary from right to left, and if it finds a match, obtain a word by the segmentation, or a shortest path word segmentation method which requires that the number of words obtained by the segmentation is the smallest in a character string in one piece of information, or a bidirectional maximum matching method which is to perform word segmentation matching in forward and backward directions at the same time. The word segmentation processing also may be performed on all the pieces of information by using a word meaning segmentation method. The word meaning segmentation method is a word segmentation method based on machine sound judgment for performing the word segmentation processing by processing an ambiguity phenomenon by using syntactic information and semantic information. The word segmentation processing also may be performed on all the pieces of information by using a statistical word segmentation method. There are two adjacent words appearing frequently according to the statistics of phrases from historical search records of the current user or historical search records of ordinary users, and the two adjacent characters may be used as a phrase for word segmentation. After the word segmentation processing of all the pieces of obtained information is completed, part-of-speech tagging is performed on all the participles (including phrases and single words) corresponding to all the pieces of information. For example, the part of speech includes: notional words such as noun, verb, adjective, quantifier and pronoun, and function words such as adverb, preposition, conjunction, auxiliary word, interjection and mimetic word.

The building module 03 is used for building preset structure participle trees by all the participles corresponding to all the pieces of information according to the participle sequence and the parts of speech of all the participles corresponding to all the pieces of information;
the resolving module 04 is used for resolving key idea information corresponding to one piece of information according to the preset structure participle tree corresponding to the information after the building of the preset structure participle tree corresponding to the information is completed.

After the part-of-speech tagging is performed on all the participles corresponding to all the pieces of information, the preset structure participle trees are built by all the participles corresponding to all the pieces of information according to the sequence of all the participles in all the pieces of information and the parts of speech tagged on all the participles. For example, node levels corresponding to different parts of speech in the preset structure participle trees may be set, and all the participles in one piece of information are used as different nodes to build the preset structure participle tree corresponding to the information. In addition, participles of different parts of speech also may form participial phrases so as to form different node levels together with all the participles to build the preset structure participle tree corresponding to the information. After the building of the preset structure participle tree corresponding to one piece of information is completed, the key idea information corresponding to the information is resolved according to the preset structure participle tree corresponding to the information. For example, a participle of a certain part of speech may be set as the key idea information, or a participle of a part of speech corresponding to the key idea information is statistically determined from the historical search records, and this part of speech is set as a key part of speech, so that the participle which belongs to the key part of speech and has the shortest node distance to a main node in the preset structure participle tree is found out from the preset structure participle tree corresponding to the information, and is used as the key idea information corresponding to the information. Multiple key parts of speech also may be set, and multiple participles belonging to the key parts of speech and a participle combination realizing the shortest node distance among the multiple participles belonging to the key parts of speech are found out in the preset structure participle tree corresponding to the information, so that information corresponding to the participle combination is used as the key idea information of the information.

This embodiment performs word segmentation on the specific type of information obtained from the data source, performs part-of-speech tagging on all the participles, builds the preset structure participle trees according to the sequence and the parts of speech of all the participles, and resolves the key idea information corresponding to the information based on the built preset structure participle trees. The word segmentation is performed on the obtained information, the preset structure participle trees is built according to the parts of speech of all the participles, and deep connections of all the participles in the information are mined by using the preset structure participle trees to obtain the key idea information, so that deep mining for the information is realized, and the key idea information in the information is accurately obtained.

Further, in other embodiments, after the key idea information corresponding to the information is resolved according to the preset structure participle tree corresponding to the information, the resolving module 04 is also used for:
recognizing a classification label corresponding to the key idea information of the information by using a pre-trained classifier, and pushing all contents of the information, and/or, link addresses of all the contents of the information to a pre-determined terminal if the recognized classification label belongs to a pre-determined classification label. For example, if a user is interested in sports information, a classification label may be pre-determined as "Sports"; and after the key idea information in the information obtained from the data source is resolved, the classification label corresponding to the key idea information of the information may be further recognized. If the recognized classification label belongs to the "Sports" label, it judges that the information is the one in which the user is interested, and then all the contents of the information, and/or, the link addresses of all the contents of the information are pushed to the pre-determined terminal such as a mobile phone and a flat computer of the user, thereby realizing effective mining and accurate pushing of target information.

Further, in other embodiments, the word segmentation module 02 is also used for:
matching a character string to be processed in each piece of information with a universal word dictionary library according to the forward maximum matching method, thus obtaining a first matching result;
matching a character string to be processed in each piece of information with the universal word dictionary library according to the backward maximum matching method, thus obtaining a second matching result, wherein the first matching result includes a first number of first phrases, and the second matching result includes a second number of second phrases. The first matching result includes a third number of single words, and the second matching result includes a fourth number of single words.

If the first number is equal to the second number, and the third number is less than or equal to the fourth number, the first matching result (including phrases and single words) is output;
if the first number is equal to the second number, and the third number is greater than the fourth number, the second matching result (including phrases and single words) is output;
if the first number is not equal to the second number, and is greater than the second number, the second matching result (including phrases and single words) is output;
if the first number is not equal to the second number, and is less than the second number, the first matching result (including phrases and single words) is output.

In this embodiment, the word segmentation processing is performed on all the pieces of obtained information by adopting the bidirectional matching method. The participle matching is performed in both the forward and backward directions at the same time to analyze the viscosity of front and back combined contents in character strings to be processed of all the pieces of information. In normal cases, phrases may represent a larger probability of the key idea information, namely the key idea information may be expressed through a phrase in a better way. Therefore, the participle matching is performed in both the forward and backward directions at the same time to find out a participle matching result which indicates a smaller number of single words and a larger number of phrases, and the participle matching result is used as a word segmentation result of the information, thus improving the accuracy of word segmentation and information mining.

Further, in other embodiments, the word segmentation module 02 is also used for:
determining the parts of speech corresponding to all the participles of all the pieces of information according to mapping relations (for example, in the universal word dictionary library, the part of speech corresponding to a playground is noun) respectively between words and their parts of speech as well as between phrases and their parts of speech in the universal word dictionary library, and/or, preset mapping relations (for example, in the preset mapping relations between the words and their parts of speech as well as between the phrases and their parts of speech, the part of speech corresponding to the playground is normal noun) respectively between the words and their parts of speech as well as between the phrases and their parts of speech, and tagging the corresponding parts of speech to all the participles of all the pieces of information, wherein the part-of-speech tagging priority level of the preset mapping relations respectively between the words and their parts of speech as well as between the phrases and their parts of speech is higher than that of the mapping relations respectively between the words and their parts of speech as well as between the phrases and their parts of speech in the universal word dictionary library. For example, if the part of speech corresponding to the playground in the universal word dictionary library is noun, but the part of speech corresponding to the playground in the preset mapping relations respectively between the words and their parts of speech as well as between the phrases and their parts of speech is normal noun, the tagging is performed preferentially according to the preset mapping relations respectively between the words and their parts of speech as well as between the phrases and their parts of speech, namely the part of speech tagged for the playground is the normal noun.

Further, in other embodiment, the preset structure participle tree includes multiple levels of nodes; a first level of node is each piece of information itself, and a second level of node is a participial phrase; and each level of node after the second level of node is the next level of participle or a participial phrase corresponding to the upper level of node. The building module 03 is also used for:
finding out target participles of preset parts of speech from all the participles corresponding to all the pieces of information; determining participial phrases corresponding to all the second levels of nodes according to the sequence of all the target participles in all the pieces of information; if one participial phrase may not be subjected to further word segmentation, determining that the participial phrase is the last level of node of a node branch where the participial phrase is positioned; and if one participial phrase may be subjected to further word segmentation, finding out target participles of all preset parts of speech in the participial phrase, and determining a participle or a participial phrase corresponding to the next level of node of the participial phrase according to the sequence of all the target participles corresponding to the participial phrase till participles corresponding to the last levels of nodes of all the node branches are determined.

The resolving module 04 is also used for:
calculating distances between participles of all preset first key parts of speech and participles of all preset second key parts of speech on the basis of the built preset structure participle trees; respectively finding out the participles, which are closest to the participles of all the preset first key parts of speech, of the preset second key parts of speech, and forming the corresponding key idea information by the participles of all the preset first key parts of speech and the closest participles of the preset second key parts of speech according to the sequence in the information.

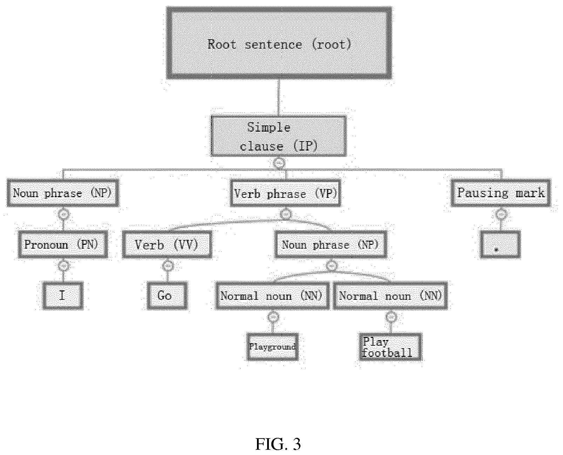

In one specific implementation mode, as shown in FIG. 3, the information is "I go to the playground to play football", a corresponding word segmentation result is "I, go to, the playground, to play football", and a part-of-speech tagging result is "I/pronoun, go to/verb, the playground/normal noun, to play football/normal noun". The preset structure participle tree built for the information "I go to the playground to play football" is as shown in FIG. 3, and includes multiple levels of nodes. The first level of node is the information itself, and the second level of node is a participial phrase (for example, a noun phrase, a verb phrase and a pausing mark such as "."). In this embodiment, the target participles of all the preset parts of speech "for example, noun and verb" are found out from all the participles corresponding to all the pieces of information, and the participial phrases corresponding to all the second levels of nodes are determined according to the sequence of all the target participles in the information. Each level of node after the second level of node is the next level of participle or a participial phrase corresponding to the upper level of node, and the third level of node is a participle or a participial phrase of the second level of node. As shown in FIG. 3, a result obtained by the part-of-speech tagging for the information is "I/pronoun, go to/verb, the playground/normal noun, to play football/normal noun"; the second level of node is determined according to the participle sequence of all the participles in the information, such as a sequence from left to right, and the second level of node is preset as a participial phrase including a noun phrase, a verb phrase, etc.; in the information, from left to right, "I" is pronoun, belonging to a noun phrase, so that "I" is determined as a second level of node; and "go to", "the playground" and "to play football" after "I" may form a verb phrase "go to the playground to play football", so that "go to the playground to play football" may be determined as a second level of node. Therefore, the second levels of nodes in the preset structure participle tree of the information include "I" and "go to the playground to play football". Further, the second level of node "I" may not be subjected to further word segmentation, so that the participial phrase is determined as the last level of node of the node branch where the participial phrase is positioned. As the second level of node, the verb phrase "go to the playground to play football" may be subjected to further word segmentation, so that participles or participial phrases of the second level of node "go to the playground to play football" may be used as third levels of nodes including a verb "go to" and a noun phrase "the playground to play football". Further, the noun phrase "the playground to play football" also may be segmented into fourth levels of nodes "the playground" and "to play football". If one participial phrase may be subjected to further word segmentation, the target participles of all the preset parts of speech "for example, noun and verb" in this participial phrase are found out, and the participles or participial phrases corresponding to the next levels of nodes of the participial phrase are determined according to the sequence of all the target participles corresponding to the participial phrase; if one participial phrase may not be subjected to further word segmentation, the participial phrase is determined as the last level of node of the node branch where the participial phrase is positioned.

Distances between the participles of all the first key parts of speech (for example, verb) and the participles of all the second key parts of speech (for example, noun) are calculated on the basis of the built preset structure participle trees, and node numbers between the participles of all the first key parts of speech and the participles of all the second key parts of speech are used as the distances, wherein the first key parts of speech and the second key parts of speech may be customized according to an actual requirement, or are correspondingly set according to parts of speech generally corresponding to key information in the historical search records of the user. The participles, which are closest to the participles of all the first key parts of speech, of the second key parts of speech are respectively found out, and the corresponding key idea information is formed by the participles of all the first key parts of speech and the closest participles of the second key parts of speech according to the sequence in the information. For example, "go to the playground" and "to play football" in FIG. 3 are used as mined key idea information corresponding to the information "I go to the play ground to play football".

The disclosure further provides a method of mining information.

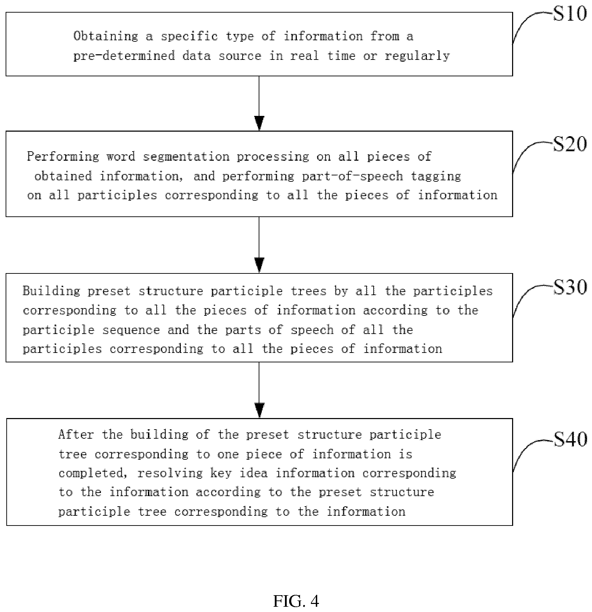

With reference to FIG. 4, it is a flowchart of one embodiment of a method of mining information of the disclosure.

In one embodiment, the method of mining the information includes:
Step S10, a specific type of information is obtained from a pre-determined data source in real time or regularly. For example, the specific type of information (for example, news title information, index information, brief introduction, etc.) may be obtained in real time or regularly from the pre-determined data source (for example, various news sites, forums, etc.) through a tool such as a web crawler.
Step S20, word segmentation processing is performed on all pieces of obtained information, and part-of-speech tagging is performed on all participles corresponding to all the pieces of information.

After the specific type of pieces of information is obtained from the data source, the word segmentation processing is performed on all the pieces of obtained information. For example, the word segmentation processing may be performed on all the pieces of information by using a character string matching word segmentation method such as a forward maximum matching method which is to perform the word segmentation on a character string in one piece of information from left to right, namely to match several continuous characters in an information text to be subjected to word segmentation with a vocabulary from left to right, and if it finds a match, obtain a word by the segmentation, or a backward maximum matching method which is to perform the word segmentation on a character string in one piece of information from right to left, namely to start matching scanning from the tail end of the information text to be subjected to word segmentation, then match several continuous characters in an information text to be subjected to word segmentation with a vocabulary from right to left, and if it finds a match, obtain a word by the segmentation, or a shortest path word segmentation method which requires that the number of words obtained by the segmentation is the smallest in a character string in one piece of information, or a bidirectional maximum matching method which is to perform word segmentation matching in forward and backward directions at the same time. The word segmentation processing also may be performed on all the pieces of information by using a word meaning segmentation method. The word meaning segmentation method is a word segmentation method based on machine sound judgment for performing the word segmentation by processing an ambiguity phenomenon by using syntactic information and semantic information. The word segmentation processing also may be performed on all the pieces of information by using a statistical word segmentation method. There are two adjacent words appearing frequently according to the statistics of phrases from historical search records of the current user or historical search records of ordinary users, and the two adjacent words may be used as a phrase for word segmentation.

After the word segmentation processing of all the pieces of obtained information is completed, part-of-speech tagging is performed on all the participles (including phrases and single words) corresponding to all the pieces of information. For example, the part of speech includes: notional words such as noun, verb, adjective, quantifier and pronoun, and function words such as adverb, preposition, conjunction, auxiliary word, interjection and mimetic word.
Step S30, preset structure participle trees are built by all the participles corresponding to all the pieces of information according to the participle sequence and the parts of speech of all the participles corresponding to all the pieces of information;
Step S40, after the building of the preset structure participle tree corresponding to one piece of information is completed, key idea information corresponding to the information is resolved according to the preset structure participle tree corresponding to the information.

After the part-of-speech tagging is performed on all the participles corresponding to all the pieces of information, the preset structure participle trees are built by all the participles corresponding to all the pieces of information according to the sequence of all the participles in all the pieces of information and the parts of speech tagged on all the participles. For example, node levels corresponding to different parts of speech in the preset structure participle trees may be set, and all the participles in one piece of information are used as different nodes to build the preset structure participle tree corresponding to the information. Participles of different parts of speech also may form participial phrases so as to form different node levels together with all the participles to build the preset structure participle tree corresponding to the information. After the building of the preset structure participle tree corresponding to one piece of information is completed, the key idea information corresponding to the information is resolved according to the preset structure participle tree corresponding to the information. For example, a participle of a certain part of speech may be set as the key idea information, or a participle of a part of speech corresponding to the key idea information is statistically determined from the historical search records, and this part of speech is set as a key part of speech, so that the participle which belongs to the key part of speech and has the shortest node distance to a main node in the preset structure participle tree is found out from the preset structure participle tree corresponding to the information, and is used as the key idea information corresponding to the information. Multiple key parts of speech also may be set, and multiple participles belonging to the key parts of speech and a participle combination realizing the shortest node distance among the multiple participles belonging to the key parts of speech are found out in the preset structure participle tree corresponding to the information, so that information corresponding to the participle combination is used as the key idea information of the information.

This embodiment performs word segmentation on the specific type of information obtained from the data source, performs part-of-speech tagging on all the participles, builds the preset structure participle trees according to the sequence and the parts of speech of all the participles, and resolves the key idea information corresponding to the information based on the built preset structure participle trees. The word segmentation is performed on the obtained information, the preset structure participle trees is built according to the parts of speech of all the participles, and deep connections of all the participles in the information are mined by using the preset structure participle trees to obtain the key idea information, so that deep mining for the information is realized, and the key idea information in the information is accurately obtained.

Further, in other embodiments, after the key idea information corresponding to the information is resolved according to the preset structure participle tree corresponding to the information, the method further includes:
a classification label corresponding to the key idea information of the information is recognized by using a pre-trained classifier, and if the recognized classification label belongs to a pre-determined classification label, all contents of the information, and/or, link addresses of all the contents of the information are pushed to a pre-determined terminal. For example, if a user is interested in sports information, a classification label may be pre-determined as "Sports"; and after the key idea information in the information obtained from the data source is resolved, the classification label corresponding to the key idea information of the information may be further recognized. If the recognized classification label belongs to the "Sports" label, it judges that the information is the one in which the user is interested, and then all the contents of the information, and/or, the link addresses of all the contents of the information are pushed to the pre-determined terminal such as a mobile phone and a flat computer of the user, thereby realizing effective mining and accurate pushing of target information.

Further, in other embodiments, in the step S20, the step that the word segmentation processing is performed on all the pieces of obtained information includes:
a character string to be processed in each piece of information is matched with a universal word dictionary library according to the forward maximum matching method, thus obtaining a first matching result;
a character string to be processed in each piece of information is matched with the universal word dictionary library according to the backward maximum matching method, thus obtaining a second matching result, wherein the first matching result includes a first number of first phrases, and the second matching result includes a second number of second phrases. The first matching result includes a third number of single words, and the second matching result includes a fourth number of single words.

If the first number is equal to the second number, and the third number is less than or equal to the fourth number, the first matching result (including phrases and single words) is output;
if the first number is equal to the second number, and the third number is greater than the fourth number, the second matching result (including phrases and single words) is output;
if the first number is not equal to the second number, and is greater than the second number, the second matching result (including phrases and single words) is output;
if the first number is not equal to the second number, and is less than the second number, the first matching result (including phrases and single words) is output.

In this embodiment, the word segmentation processing is performed on all the pieces of obtained information by adopting the bidirectional matching method. The participle matching is performed in both the forward and backward directions at the same time to analyze the viscosity of front and back combined contents in character strings to be processed of all the pieces of information. In normal cases, phrases may represent a larger probability of the key idea information, namely the key idea information may be expressed through a phrase in a better way. Therefore, the participle matching is performed in both the forward and backward directions at the same time to find out a participle matching result which indicates a smaller number of single words and a larger number of phrases, and the participle matching result is used as a word segmentation result of the information, thus improving the accuracy of word segmentation and information mining.

Further, in other embodiments, in the step S20, the step that part-of-speech tagging is performed on all particles corresponding to all the pieces of information includes:
the parts of speech corresponding to all the participles of all the pieces of information are determined according to mapping relations (for example, in the universal word dictionary library, the part of speech corresponding to a playground is noun) respectively between words and their parts of speech as well as between phrases and their parts of speech in the universal word dictionary library, and/or, preset mapping relations (for example, in the preset mapping relations between the words and their parts of speech as well as between the phrases and their parts of speech, the part of speech corresponding to the playground is normal noun) respectively between the words and their parts of speech as well as between the phrases and their parts of speech, and the corresponding parts of speech are tagged to all the participles of all the pieces of information, wherein the part-of-speech tagging priority level of the preset mapping relations respectively between the words and their parts of speech as well as between the phrases and their parts of speech is higher than that of the mapping relations respectively between the words and their parts of speech as well as between the phrases and their parts of speech in the universal word dictionary library. For example, if the part of speech corresponding to the playground in the universal word dictionary library is noun, but the part of speech corresponding to the playground in the preset mapping relations respectively between the words and their parts of speech as well as between the phrases and their parts of speech is normal noun, the tagging is performed preferentially according to the preset mapping relations respectively between the words and their parts of speech as well as between the phrases and their parts of speech, namely the part of speech tagged for the playground is the normal noun.

Further, in other embodiment, the preset structure participle tree includes multiple levels of nodes; a first level of node is each piece of information itself, and a second level of node is a participial phrase; and each level of node after the second level of node is the next level of participle or a participial phrase corresponding to the upper level of node. The step S30 includes:
A1. target participles of all preset parts of speech are found out from all the participles corresponding to all the pieces of information;
A2. participial phrases corresponding to all the second levels of nodes are determined according to the sequence of all the target participles in all the pieces of information, specifically words before the latter target participle may be used as a participial phrase of the former target participle, and the last target participle and words after the last target participle may be used as a last participial phrase;
A3, if one participial phrase may not be subjected to further word segmentation, it determines that the participial phrase is the last level of node of a node branch where the participial phrase is positioned;
A4, if one participial phrase may be subjected to further word segmentation, target participles of all preset parts of speech in the participial phrase are found out, and a participle or a participial phrase corresponding to the next level of node of the participial phrase is determined according to the sequence of all the target participles corresponding to the participial phrase;
A5, the steps A3 and A4 are repeatedly executed till participles corresponding to the last levels of nodes of all the node branches are determined.

The step S40 includes:
distances between participles of all preset first key parts of speech and participles of all preset second key parts of speech are calculated on the basis of the built preset structure participle trees;
the participles, which are closest to the participles of all the preset first key parts of speech, of the preset second key parts of speech are respectively found out, and the corresponding key idea information is formed by the participles of all the preset first key parts of speech and the closest participles of the preset second key parts of speech according to the sequence in the information.

In one specific implementation mode, as shown in FIG. 3, it is a schematic diagram of a preset structure participle tree in one embodiment of a method of mining information of the disclosure. The information is "I go to the playground to play football", a corresponding word segmentation result is "I, go to, the playground, to play football", and a part-of-speech tagging result is "I/pronoun, go to/verb, the playground/normal noun, to play football/normal noun". The preset structure participle tree built for the information "I go to the playground to play football" is as shown in FIG. 3, and includes multiple levels of nodes. The first level of node is the information itself, and the second level of node is a participial phrase (for example, a noun phrase, a verb phrase and a pausing mark such as "."). In this embodiment, the target participles of all the preset parts of speech "for example, noun and verb" are found out from all the participles corresponding to all the pieces of information, and the participial phrases corresponding to all the second levels of nodes are determined according to the sequence of all the target participles in the information. Each level of node after the second level of node is the next level of participle or a participial phrase corresponding to the upper level of node, and the third level of node is a participle or a participial phrase of the second level of node. As shown in FIG. 3, a result obtained by the part-of-speech tagging for the information is "I/pronoun, go to/verb, the playground/normal noun, to play football/normal noun"; the second level of node is determined according to the participle sequence of all the participles in the information, such as a sequence from left to right, and the second level of node is preset as a participial phrase including a noun phrase, a verb phrase, etc.; in the information, from left to right, "I" is pronoun, belonging to a noun phrase, so that "I" is determined as a second level of node; and "go to", "the playground" and "to play football" after "I" may form a verb phrase "go to the playground to play football", so that "go to the playground to play football" may be determined as a second level of node. Therefore, the second levels of nodes in the preset structure participle tree of the information include "I" and "go to the playground to play football". Further, the second level of node "I" may not be subjected to further word segmentation, so that the participial phrase is determined as the last level of node of the node branch where the participial phrase is positioned. As the second level of node, the verb phrase "go to the playground to play football" may be subjected to further word segmentation, so that participles or participial phrases of the second level of node "go to the playground to play football" may be used as third levels of nodes including a verb "go to" and a noun phrase "the playground to play football". Further, the noun phrase "the playground to play football" also may be segmented into fourth levels of nodes "the playground" and "to play football". If one participial phrase may be subjected to further word segmentation, the target participles of all the preset parts of speech "for example, noun and verb" in this participial phrase are found out, and the participles or participial phrases corresponding to the next levels of nodes of the participial phrase are determined according to the sequence of all the target participles corresponding to the participial phrase; if one participial phrase may not be subjected to further word segmentation, the participial phrase is determined as the last level of node of the node branch where the participial phrase is positioned.

Distances between the participles of all the first key parts of speech (for example, verb) and the participles of all the second key parts of speech (for example, noun) are calculated on the basis of the built preset structure participle trees, and node numbers between the participles of all the first key parts of speech and the participles of all the second key parts of speech are used as the distances, wherein the first key parts of speech and the second key parts of speech may be customized according to an actual requirement, or are correspondingly set according to parts of speech generally corresponding to key information in the historical search records of the user. The participles, which are closest to the participles of all the first key parts of speech, of the second key parts of speech are respectively found out, and the corresponding key idea information is formed by the participles of all the first key parts of speech and the closest participles of the second key parts of speech according to the sequence in the information. For example, "go to the playground" and "to play football" in FIG. 3 are used as mined key idea information corresponding to the information "I go to the play ground to play football".

In addition, the disclosure further provides a computer readable storage medium which stores a system of mining information. The system of mining the information may be executed by at least one set of processing equipment to enable the at least one set of processing equipment to execute the steps of the method of mining the information in the above-mentioned embodiments. Specific implementation processes, such as steps S10, S20 and S30, of the method of mining the information are as mentioned above, so that no more details will be described here.

It should be noted that in this text, terms "include" and "comprise" or any other variations aim at covering non-excludable including, so that processes, methods, objects or devices including a series of elements not only include those elements, but also include other elements which are not definitely listed, or also include fixed elements of these processes, methods, objects or devices. In the absence of more restrictions, an element defined by a sentence "including a/an..." does not exclude that the processes, methods, objects or devices including this element still include other same elements.

By the description of the foregoing implementation modes, it will be evident to those skilled in the art that the methods according to the above-mentioned embodiments may be implemented by means of software and a necessary general-purpose hardware platform; they may of course be implemented by hardware, but in many cases, the former will be more advantageous. Based on such an understanding, the essential technical solution of the disclosure, or the portion that contributes to the prior art may be embodied as software products. Computer software products can be stored in a storage medium (e.g., an ROM/RAM (Read Only Memory/Random Access Memory), a magnetic disk, an optical disc) and may include a plurality of instructions that can enable a set of terminal equipment (e.g., a mobile phone, a computer, a server, an air conditioner, or network equipment) to execute the methods described in the various embodiments of the disclosure.

The foregoing accompanying drawings describe exemplary embodiments of the disclosure, and therefore are not intended as limiting the patentable scope of the disclosure. The foregoing numbering of the embodiments of the disclosure is merely descriptive, but is not indicative of the advantages and disadvantages of these embodiments. In addition, although a logic sequence is shown in the flowchart, the steps shown or described may be executed in a sequence different from this logic sequence in some cases.

Those skilled in the art can make various transformation solutions to implement the disclosure without departing from the scope and essence of the disclosure, for example, features of one embodiment may be used in another embodiment to obtain another embodiment. Any modifications, equivalent replacements and improvements that are made taking advantage of the technical conception of the disclosure shall all fall within the patentable scope of the disclosure.

## Claims

1. A method of mining information, comprising:
obtaining a specific type of information from a pre-determined data source in real time or regularly;
performing word segmentation processing on all pieces of obtained information, and performing part-of-speech tagging on all participles corresponding to all the pieces of information;
building preset structure participle trees by all the participles corresponding to all the pieces of information according to the participle sequence and the parts of speech of all the participles corresponding to all the pieces of information;
after the building of the preset structure participle tree corresponding to one piece of information is completed, resolving key idea information corresponding to the information according to the preset structure participle tree corresponding to the information.

2. The method of mining the information according to claim 1, which is **characterized in that** the step of performing word segmentation processing on all the pieces of obtained information comprises:
matching a character string to be processed in each piece of information with a universal word dictionary library according to a forward maximum matching method, thus obtaining a first matching result which comprises a first number of first phrases and a third number of single words;
matching a character string to be processed in each piece of information with the universal word dictionary library according to a backward maximum matching method, thus obtaining a second matching result which comprises a second number of second phrases and a fourth number of single words;
if the first number is equal to the second number, and the third number is less than or equal to the fourth number, determining the first matching result as a word segmentation result of the information;
if the first number is equal to the second number, and the third number is greater than the fourth number, determining the second matching result as the word segmentation result of the information;
if the first number is not equal to the second number, and is greater than the second number, determining the second matching result as the word segmentation result of the information;
if the first number is not equal to the second number, and is less than the second number, determining the first matching result as the word segmentation result of the information.

3. The method of mining the information according to claim 1 or 2, which is **characterized in that** the step of performing part-of-speech tagging on all the participles corresponding to all the pieces of information comprises:
determining the parts of speech corresponding to all the participles of all the pieces of information according to mapping relations respectively between words and the parts of speech as well as between phrases and the parts of speech in the universal word dictionary library, and/or, preset mapping relations respectively between the words and the parts of speech as well as between the phrases and the parts of speech;
tagging the corresponding parts of speech to all the participles of all the pieces of information.

4. The method of mining the information according to claim 1 or 2, which is **characterized in that** the preset structure participle tree comprises multiple levels of nodes; a first level of node is each piece of information, and a second level of node is a participial phrase; each level of node after the second level of node is the next level of participle or a participial phrase corresponding to the upper level of node; and the step of building preset structure participle trees by all the participles corresponding to all the pieces of information according to the participle sequence and the parts of speech of all the participles corresponding to all the pieces of information comprises:
A1. finding out target participles of all preset parts of speech from all the participles corresponding to all the pieces of information;
A2. determining participial phrases corresponding to all the second levels of nodes according to the sequence of all the target participles in all the pieces of information;
A3. if one participial phrase may not be subjected to further word segmentation, determining that the participial phrase is the last level of node of a node branch where the participial phrase is positioned;
A4. if one participial phrase may be subjected to further word segmentation, finding out target participles of all the preset parts of speech in the participial phrase, and determining a participle or a participial phrase corresponding to the next level of node of the participial phrase according to the sequence of all the target participles corresponding to the participial phrase;
A5. repeatedly executing the steps A3 and A4 till participles corresponding to the last levels of nodes of all the node branches are determined.

5. The method of mining the information according to claim 4, which is **characterized in that** the step of resolving key idea information corresponding to the information according to the preset structure participle tree corresponding to the information comprises:
calculating distances between participles of all preset first key parts of speech and participles of all preset second key parts of speech on the basis of the built preset structure participle trees;
respectively finding out the participles, which are closest to the participles of all the preset first key parts of speech, of the preset second key parts of speech, and forming the corresponding key idea information by the participles of all the preset first key parts of speech and the closest participles of the preset second key parts of speech according to the sequence in the information.

6. A system of mining information, comprising:
an obtaining module, which is used for obtaining a specific type of information from a pre-determined data source in real time or regularly;
a word segmentation module, which is used for performing word segmentation processing on all pieces of obtained information, and performing part-of-speech tagging on all participles corresponding to all the pieces of information;
a building module, which is used for building preset structure participle trees by all the participles corresponding to all the pieces of information according to the participle sequence and the parts of speech of all the participles corresponding to all the pieces of information;
a resolving module, which is used for resolving key idea information corresponding to one piece of information according to the preset structure participle tree corresponding to the information after the building of the preset structure participle tree corresponding to the information is completed.

7. The system of mining the information according to claim 6, which is **characterized in that** the word segmentation module is also used for:
matching a character string to be processed in each piece of information with a universal word dictionary library according to a forward maximum matching method, thus obtaining a first matching result which comprises a first number of first phrases and a third number of single words;
matching a character string to be processed in each piece of information with the universal word dictionary library according to a backward maximum matching method, thus obtaining a second matching result which comprises a second number of second phrases and a fourth number of single words;
if the first number is equal to the second number, and the third number is less than or equal to the fourth number, determining the first matching result as a word segmentation result of the information;
if the first number is equal to the second number, and the third number is greater than the fourth number, determining the second matching result as the word segmentation result of the information;
if the first number is not equal to the second number, and is greater than the second number, determining the second matching result as the word segmentation result of the information;
if the first number is not equal to the second number, and is less than the second number, determining the first matching result as the word segmentation result of the information.

8. The system of mining the information according to claim 6 or 7, which is **characterized in that** the word segmentation module is also used for:
determining the parts of speech corresponding to all the participles of all the pieces of information according to mapping relations respectively between words and the parts of speech as well as between phrases and the parts of speech in the universal word dictionary library, and/or, preset mapping relations respectively between the words and the parts of speech as well as between the phrases and the parts of speech;
tagging the corresponding parts of speech to all the participles of all the pieces of information.

9. The system of mining the information according to claim 6 or 7, which is **characterized in that** the preset structure participle tree comprises multiple levels of nodes; a first level of node is each piece of information, and a second level of node is a participial phrase; each level of node after the second level of node is the next level of participle or a participial phrase corresponding to the upper level of node; and the building module is also used for:
finding out target participles of all preset parts of speech from all the participles corresponding to all the pieces of information; determining participial phrases corresponding to all the second levels of nodes according to the sequence of all the target participles in all the pieces of information; if one participial phrase may not be subjected to further word segmentation, determining that the participial phrase is the last level of node of a node branch where the participial phrase is positioned; if one participial phrase may be subjected to further word segmentation, finding out target participles of all the preset parts of speech in the participial phrase, and determining a participle or a participial phrase corresponding to the next level of node of the participial phrase according to the sequence of all the target participles corresponding to the participial phrase till participles corresponding to the last levels of nodes of all the node branches are determined.

10. The system of mining the information according to claim 9, which is **characterized in that** the resolving module is also used for:
calculating distances between participles of all preset first key parts of speech and participles of all preset second key parts of speech on the basis of the built preset structure participle trees;
respectively finding out the participles, which are closest to the participles of all the preset first key parts of speech, of the preset second key parts of speech, and forming the corresponding key idea information by the participles of all the preset first key parts of speech and the closest participles of the preset second key parts of speech according to the sequence in the information.

11. An electronic device, comprising storage equipment, processing equipment and a system of mining information, **characterized in that** the system is stored on the storage equipment and is operated on the processing equipment; and the system of mining the information is executed by the processing equipment to implement the following steps:
obtaining a specific type of information from a pre-determined data source in real time or regularly;
performing word segmentation processing on all pieces of obtained information, and performing part-of-speech tagging on all participles corresponding to all the pieces of information;
building preset structure participle trees by all the participles corresponding to all the pieces of information according to the participle sequence and the parts of speech of all the participles corresponding to all the pieces of information;
after the building of the preset structure participle tree corresponding to one piece of information is completed, resolving key idea information corresponding to the information according to the preset structure participle tree corresponding to the information.

12. The electronic device according to claim 11, which is **characterized in that** the step of performing word segmentation processing on all the pieces of obtained information comprises:
matching a character string to be processed in each piece of information with a universal word dictionary library according to a forward maximum matching method, thus obtaining a first matching result which comprises a first number of first phrases and a third number of single words;
matching a character string to be processed in each piece of information with the universal word dictionary library according to a backward maximum matching method, thus obtaining a second matching result which comprises a second number of second phrases and a fourth number of single words;
if the first number is equal to the second number, and the third number is less than or equal to the fourth number, determining the first matching result as a word segmentation result of the information;
if the first number is equal to the second number, and the third number is greater than the fourth number, determining the second matching result as the word segmentation result of the information;
if the first number is not equal to the second number, and is greater than the second number, determining the second matching result as the word segmentation result of the information;
if the first number is not equal to the second number, and is less than the second number, determining the first matching result as the word segmentation result of the information.

13. The electronic device according to claim 11 or 12, which is **characterized in that** the step of performing part-of-speech tagging on all the participles corresponding to all the pieces of information comprises:
determining the parts of speech corresponding to all the participles of all the pieces of information according to mapping relations respectively between words and the parts of speech as well as between phrases and the parts of speech in the universal word dictionary library, and/or, preset mapping relations respectively between the words and the parts of speech as well as between the phrases and the parts of speech; and tagging the corresponding parts of speech to all the participles of all the pieces of information.

14. The electronic device according to claim 11 or 12, which is **characterized in that** the preset structure participle tree comprises multiple levels of nodes; a first level of node is each piece of information, and a second level of node is a participial phrase; each level of node after the second level of node is the next level of participle or a participial phrase corresponding to the upper level of node; and the step of building preset structure participle trees by all the participles corresponding to all the pieces of information according to the participle sequence and the parts of speech of all the participles corresponding to all the pieces of information comprises:
finding out target participles of all preset parts of speech from all the participles corresponding to all the pieces of information; determining participial phrases corresponding to all the second levels of nodes according to the sequence of all the target participles in all the pieces of information; if one participial phrase may not be subjected to further word segmentation, determining that the participial phrase is the last level of node of a node branch where the participial phrase is positioned; if one participial phrase may be subjected to further word segmentation, finding out target participles of all the preset parts of speech in the participial phrase, and determining a participle or a participial phrase corresponding to the next level of node of the participial phrase according to the sequence of all the target participles corresponding to the participial phrase till participles corresponding to the last levels of nodes of all the node branches are determined.

15. The electronic device according to claim 14, which is **characterized in that** the step of resolving key idea information corresponding to the information according to the preset structure participle tree corresponding to the information comprises:
calculating distances between participles of all preset first key parts of speech and participles of all preset second key parts of speech on the basis of the built preset structure participle trees;
respectively finding out the participles, which are closest to the participles of all the preset first key parts of speech, of the preset second key parts of speech, and forming the corresponding key idea information by the participles of all the preset first key parts of speech and the closest participles of the preset second key parts of speech according to the sequence in the information.

16. A computer readable storage medium, which stores at least one computer readable instruction executed by processing equipment to implement the following operation:
obtaining a specific type of information from a pre-determined data source in real time or regularly;
performing word segmentation processing on all pieces of obtained information, and performing part-of-speech tagging on all participles corresponding to all the pieces of information;
building preset structure participle trees by all the participles corresponding to all the pieces of information according to the participle sequence and the parts of speech of all the participles corresponding to all the pieces of information;
after the building of the preset structure participle tree corresponding to one piece of information is completed, resolving key idea information corresponding to the information according to the preset structure participle tree corresponding to the information.

17. The computer readable storage medium according to claim 16, which is **characterized in that** the step of performing word segmentation processing on all the pieces of obtained information comprises:
matching a character string to be processed in each piece of information with a universal word dictionary library according to a forward maximum matching method, thus obtaining a first matching result which comprises a first number of first phrases and a third number of single words;
matching a character string to be processed in each piece of information with the universal word dictionary library according to a backward maximum matching method, thus obtaining a second matching result which comprises a second number of second phrases and a fourth number of single words;
if the first number is equal to the second number, and the third number is less than or equal to the fourth number, determining the first matching result as a word segmentation result of the information;
if the first number is equal to the second number, and the third number is greater than the fourth number, determining the second matching result as the word segmentation result of the information;
if the first number is not equal to the second number, and is greater than the second number, determining the second matching result as the word segmentation result of the information;
if the first number is not equal to the second number, and is less than the second number, determining the first matching result as the word segmentation result of the information.

18. The computer readable storage medium according to claim 16 or 17, which is **characterized in that** the step of performing part-of-speech tagging on all the participles corresponding to all the pieces of information comprises:
determining the parts of speech corresponding to all the participles of all the pieces of information according to mapping relations respectively between words and the parts of speech as well as between phrases and the parts of speech in the universal word dictionary library, and/or, preset mapping relations respectively between the words and the parts of speech as well as between the phrases and the parts of speech;
tagging the corresponding parts of speech to all the participles of all the pieces of information.

19. The computer readable storage medium according to claim 16 or 17, which is **characterized in that** the preset structure participle tree comprises multiple levels of nodes; a first level of node is each piece of information, and a second level of node is a participial phrase; each level of node after the second level of node is the next level of participle or a participial phrase corresponding to the upper level of node; and the step of building preset structure participle trees by all the participles corresponding to all the pieces of information according to the participle sequence and the parts of speech of all the participles corresponding to all the pieces of information comprises:
A1. finding out target participles of all preset parts of speech from all the participles corresponding to all the pieces of information;
A2. determining participial phrases corresponding to all the second levels of nodes according to the sequence of all the target participles in all the pieces of information;
A3. if one participial phrase may not be subjected to further word segmentation, determining that the participial phrase is the last level of node of a node branch where the participial phrase is positioned;
A4. if one participial phrase may be subjected to further word segmentation, finding out target participles of all the preset parts of speech in the participial phrase, and determining a participle or a participial phrase corresponding to the next level of node of the participial phrase according to the sequence of all the target participles corresponding to the participial phrase;
A5. repeatedly executing the steps A3 and A4 till participles corresponding to the last levels of nodes of all the node branches are determined.

20. The computer readable storage medium according to claim 19, which is **characterized in that** the step of resolving key idea information corresponding to the information according to the preset structure participle tree corresponding to the information comprises:
calculating distances between participles of all preset first key parts of speech and participles of all preset second key parts of speech on the basis of the built preset structure participle trees;
respectively finding out the participles, which are closest to the participles of all the preset first key parts of speech, of the preset second key parts of speech, and forming the corresponding key idea information by the participles of all the preset first key parts of speech and the closest participles of the preset second key parts of speech according to the sequence in the information.
